# EUROPÄISCHE PATENTANMELDUNG

(11) **EP 3 290 319 A1**
(43) Veröffentlichungstag der Anmeldung: **07.03.2018**
(21) Anmeldenummer: 17186173.5
(22) Anmeldetag: 14.08.2017
(51) Int. Cl.: B62K 21/26, B62K 23/02

(54) **FAHRRADGRIFFELEMENT**

(30) Priorität: 29.08.2016 DE 202016005195 U
(71) Anmelder: Ergon International GmbH, 56070 Koblenz (DE)
(72) Erfinder: Arnold, Franc, 56068 Koblenz (DE); Krause, Andreas, 56068 Koblenz (DE)
(74) Vertreter: dompatent von Kreisler Selting Werner - Partnerschaft von Patent- und Rechtsanwälten mbB

(57) **Zusammenfassung**

Ein Fahrradgriffelement weist ein Befestigungselement zur Befestigung an einer Rennrad-Bremsgriffhalterung (20) oder einem Lenker auf. Mit dem Befestigungselement (22) ist ein Handballen-Auflageelement (30) verbunden. Mit dem Auflageelement ist eine elektrische Eingabeeinrichtung (42, 46) und/oder ein Aktuator verbunden.

## Beschreibung

Die Erfindung betrifft ein Fahrradgriffelement.

Zur Betätigung moderner elektrischer Schaltungen bei Fahrrädern ist es bekannt, am Lenker des Fahrrads elektrische Schaltelemente, wie Schalter oder Taster, vorzusehen.

Aufgabe der Erfindung ist es, ein Fahrradgriffelement zu schaffen, das mehrere Funktionen vereint.

Die Lösung der Aufgabe erfolgt erfindungsgemäß durch ein Fahrradgriffelement gemäß Anspruch 1.

Das erfindungsgemäße Fahrradgriffelement vereint insbesondere die Funktionen, dass das Griffelement ergonomisch ausgestaltet ist und ferner eine elektrische Eingabeeinrichtung vorgesehen ist.

Das Fahrradgriffelement weist ein Befestigungselement zur Befestigung an einer Bremsgriffhalterung und/oder an einem Lenker auf, wobei es besonders bevorzugt ist, dass das entsprechende Befestigungselement derart ausgebildet ist, um eine Befestigung an einem Rennradlenker, insbesondere im Bereich der Rennrad-Bremsgriffhalterung, vorzusehen. Mit dem Befestigungselement ist ein Auflageelement verbunden bzw. das Befestigungselement dient zum Befestigen des Auflageelements des Fahrradgriffelements an einer Bremsgriffhalterung und/oder einem Lenker. Das Auflageelement dient insbesondere zur Auflage bzw. zum Abstützen eines Handballens, so dass der Handballen beim Fahren ergonomisch abgestützt ist. Erfindungsgemäß ist mit dem Auflageelement eine elektrische Eingabeeinrichtung verbunden. Die elektrische Eingabeeinrichtung weist insbesondere einen Schalter oder Taster auf. Durch das erfindungsgemäße Fahrradgriffelement ist es einerseits möglich, den Fahrradlenker in einer ergonomischen Position zu halten und beispielsweise den Handballen auf einem Auflageelement abzustützen. Gleichzeitig ist es in dieser ergonomischen Greifposition möglich, die elektrische Eingabeeinrichtung zu betätigen. Die Eingabeeinrichtung kann hierbei beispielsweise zum Schalten einer elektrischen Schaltung dienen. Insbesondere kann die Eingabeeinrichtung aber auch zum Steuern eines Mobiltelefons, beispielsweise zum Annehmen eines Anrufs, zum Steuern von Apps auf dem Mobiltelefon, wie Navigationsapplikationen und dergleichen, dienen.

Das erfindungsgemäße Fahrradgriffelement weist ein Befestigungselement zum Befestigen an einer Bremsgriffhalterung insbesondere einer Rennrad-Bremsgriffhalterung oder an einem Lenker auf. Hierbei kann es sich um eine unmittelbare oder eine mittelbare Befestigung an dem Lenker handeln. Beispielweise kann das Befestigungselement auch an einem Lenkeransatz wie einem Lenkerhorn oder Barend befestigt werden. Auch kann der Lenker in Draufsicht im Wesentlichen U-förmig ausgebildet sein, wobei die beiden Enden ähnlich Lenkhörnern in Fahrtrichtung weisen. Das Befestigungselement kann sodann an diesen Enden befestigt werden. Anstelle einer Rennrad-Bremsgriffhalterung kann es sich auch um eine Bremsgriffhalterung für ein Triathlonrad oder dergleichen handeln. Bevorzugt ist es, dass es sich um eine Bremsgriffhalterung handelt, die entsprechend einer Rennrad-Bremsgriffhalterung ausgebildet ist. Derartige Bremsgriffhalterungen sind insbesondere von dem Hood oder einer anderen hüllenartigen Schutzeinrichtung umgeben. Die Ausgestaltung des Befestigungselements kann auf unterschiedliche Weiser erfolgen. Beispielsweise kann es sich um eine Art Schelle oder dergleichen handeln, die ein beispielsweise rohrförmiges Element des Lenkers oder eine Bremsgriffhalterung umgibt. Auch kann es sich bei dem Befestigungselement um eine Art Ansatz oder dergleichen handeln, der beispielsweise mittels eines Rastelements einer Schraubverbindung oder dergleichen mit dem Lenker oder insbesondere mit der Bremsgriffhalterung verbunden bzw. an dieser fixiert ist.

In besonders bevorzugter Ausführungsform ist die Eingabeeinrichtung zumindest teilweise insbesondere vollständig innerhalb des Auflageelements angeordnet. Beispielsweise kann die Eingabeeinrichtung in das Auflageelement eingegossen sein. Beispielsweise kann lediglich ein Taster, wie ein Schalter, nicht von dem Auflageelement umgeben sein. Auch ist es möglich, den entsprechenden Taster unterhalb einem dünnen, elastischen Bereich des Auflageelements anzuordnen, so dass eine Art Schutzhülle über dem Taster ausgebildet ist. Dies hat insbesondere den Vorteil, dass das Eindringen von Feuchtigkeit vermieden ist.

Vorzugsweise weist die Eingabeeinrichtung ein Signalerzeugungselement auf. Dieses kann über Kabel oder auch kabellos, beispielsweise unmittelbar mit einem Mobiltelefon, einer Steuereinrichtung oder dergleichen, verbunden sein. Mit der Signalerzeugungseinrichtung ist vorzugsweise ein Schaltelement, ein Taster oder dergleichen, verbunden. Durch Betätigen des Schaltelements erfolgt somit eine Signalerzeugung.

Gemäß einer selbstständigen Erfindung ist anstelle der elektrischen Eingabeeinrichtung und vorzugsweise zusätzlich zur Eingabeeinrichtung ein elektrischer Aktuator vorgesehen. Mit Hilfe des Aktuators kann ein vom Benutzer haptisch wahrnehmbarer Impuls erzeugt werden. Insofern erfolgt ein haptisches Feedback. Beispielsweise kann dem Benutzer über ein Vibrieren oder Pulsieren des Aktuators eine Information übermittelt werden. Hierbei kann es sich beispielsweise um eine Information eines Navigationsgerätes handeln, wobei je Hand ein Fahrradgriffelement vorgesehen ist, so dass durch entsprechendes Vibrieren zum Beispiel angezeigt werden könnte, dass eine Abzweigung unmittelbar bevorsteht oder dergleichen. Auch kann dem Benutzer hierüber ein eingehendes Telefonat, ein abgeschlossener Schaltvorgang oder dergleichen angezeigt werden.

In besonders bevorzugter Ausführungsform weist der Aktuator ein Vibrationselement auf.

Ein geeignetes Vibrationselement ist beispielsweise in WO 2014/108190 und in DE 10 2017 203 598 beschrieben. Vorzugsweise sind die elektrische Eingabeeinrichtung und/oder der Aktuator mit einer Energiequelle verbunden. Eine entsprechende Energiequelle kann in das Auflageelement integriert oder auch außerhalb des Auflageelements angeordnet sein, wobei sodann eine kabelgebundene Verbindung zwischen der Eingabeeinrichtung und/oder dem Aktuator und der Energiequelle bevorzugt ist.

In einer weiteren bevorzugten Ausführungsform sind die Eingabeeinrichtung und/oder der Aktuator mit einer Steuereinrichtung verbunden. Die Steuereinrichtung kann durch ein Mobiltelefon realisiert sein. Ebenso kann es sich um eine gesonderte Steuereinrichtung handeln, die sodann wiederum beispielsweise mit einem Mobiltelefon kommunizieren kann, wobei eine derartige Kommunikation nur optional ist. Die Steuereinrichtung kann drahtgebunden oder drahtlos zusätzlich auch mit einem Federelement verbunden sein, um beispielsweise eine Federhärte oder Federeinstellung unmittelbar steuern zu können. Eine entsprechende Steuerung könnte wiederum durch die Eingabeeinrichtung erfolgen. Auch kann eine Verbindung zu in einem Fahrradhelm integrierten Aktuator vorgesehen sein. Mit Hilfe eines derartigen Aktuators kann das Übertragen von Akustiksignalen mit Hilfe von Knochenkontakt erfolgen. Eine derartige Anwendung ist beispielsweise in DE 10 2016 208 584.0 beschrieben.

Da eine möglichst ergonomische Ausgestaltung des Auflageelements erfindungsgemäß bevorzugt ist, ist mit dem Befestigungselement vorzugsweise ein Handballen-Auflageelement verbunden. Das Handballen-Auflageelement ist derart ausgebildet, dass auf diesem ein Handballen in der entsprechenden Greifposition aufliegt bzw. ein Abstützen des Handballens erfolgt. Insbesondere wird hierbei der Teil des Handballens, der im Bereich des Daumens ist, abgestützt. Vorzugsweise ist das Fahrradgriffelement in montiertem Zustand derart angeordnet, dass hierdurch das Abstützen des Handballens in einer gegenüber der herkömmlichen Greifposition um 90° gedrehten Greifposition erfolgt. Es handelt sich somit insbesondere um die Greifposition in der ein Greifen eines Lenkerhörnchens bzw. Barends oder eines Hoods einer Rennradbremsgriffhalterung erfolgt. In dieser Greifposition, die insbesondere beim Rennradfahren die häufigste Greifposition darstellt, erfolgt bei bekannten Fahrradgriffen kein Abstützen des Handballens. Mit Hilfe des erfindungsgemäßen Fahrradgriffelements kann somit auch in dieser Greifposition eine erhebliche Entlastung erfolgen.

In bevorzugter Ausführungsform ist eine Oberseite des Handballen-Auflageelements in montiertem Zustand im Wesentlichen horizontal oder in Fahrtrichtung leicht steigend angeordnet. Hierbei erfolgt ein Steigen der Oberseite vorzugsweise um weniger als 5° insbesondere weniger als 10°. Bei der horizontalen und insbesondere in der leicht steigenden Ausrichtung der Oberseite des Handballen-Auflageelements kann eine gute Handentlastung realisiert werden.

Des Weiteren ist es bevorzugt, dass die Oberseite des Handballen-Auflageelements in montiertem Zustand gegenüber einer horizontalen Ebene ausgehend vom Lenker bei einem Rennradlenker bzw. ausgehend von einem Lenkerhörnchen bzw. Barend nach innen fallend ausgebildet ist. Insbesondere weist die Oberseite gegenüber einer horizontalen Ebene einen Winkel zwischen 0° und 20°, vorzugsweise einen Winkel zwischen 5° und 10° auf, so dass die Oberseite in bevorzugter Ausführungsform leicht nach innen fällt. Die Oberseite des Handballen-Auflageelements kann somit einerseits in Fahrtrichtung horizontal oder leicht steigend und/oder senkrecht zur Fahrtrichtung nach innen horizontal oder leicht fallend ausgebildet sein.

Sofern die Oberseite des Handballen-Auflageelements in sich nicht eben sondern gekrümmt, insbesondere konkav gekrümmt, ist, ergeben sich die vorstehend angegebenen Winkel gegenüber einer Tangente zur Oberfläche, wobei die Tangente an einem Punkt mit mittlerem Abstand zwischen der Außenseite der Hood bzw. der Außenseite eines Barends und dem Rand des Handballen-Auflageelements angeordnet ist. Vorzugsweise wird als Punkt, an dem die Tangente angelegt wird, der Mittelpunkt bzw. Schwerpunkt der Oberfläche bestimmt, d. h. es handelt sich somit um den mittleren Punkt in Längsrichtung bzw. Fahrtrichtung des Handballen-Auflageelements sowie um einen Punkt, der einen mittleren Abstand des Handballen-Auflageelements senkrecht zur Fahrtrichtung definiert.

Insbesondere zur Verbesserung der Ergonomie ist es des Weiteren bevorzugt, dass die Oberseite insbesondere in Verbindung mit einer im Wesentlichen horizontalen oder leicht steigenden Ausrichtung eine sich im Wesentlichen in Längsrichtung des Handballen-Auflageelements erstreckende Mulde aufweist. Die Längsrichtung des Handballen-Auflageelements entspricht hierbei in montiertem Zustand im Wesentlichen der Fahrtrichtung. Insbesondere erstreckt sich die Längsrichtung der Mulde in montiertem Zustand nicht exakt in Längs- bzw. Fahrtrichtung, sondern ist leicht nach innen geneigt. Die Ausrichtungen der beiden Mulden laufen in Fahrtrichtung gesehen in montiertem Zustand somit aufeinander zu. Die Mulde ist somit insbesondere konvex ausgebildet, wobei der Krümmungsradius vorzugsweise größer als 50 mm und besonders bevorzugt größer als 80 mm ist.

Bei einer weiteren bevorzugten Ausführungsform weist das Handballen-Auflageelement eine Randerhöhung auf, die dem Befestigungselement gegenüberliegend angeordnet ist. Hierdurch kann die Ergonomie weiter verbessert werden.

In bevorzugter Ausführungsform erfolgt ein Montieren des Fahrradgriffelements derart, dass das Handballen-Auflageelement in Fahrtrichtung bezogen auf ein Lenkerhörnchen, Barend oder ein Hood auf der jeweiligen Innenseite angeordnet ist. Dementsprechend ist in bevorzugter Ausführungsform auch die Randerhöhung in montiertem Zustand auf der Innenseite angeordnet. Bevorzugt ist es hierbei, dass sich die Randerhöhung auf der Innenseite im Wesentlichen über die gesamte Länge des Handballen-Auflageelements erstreckt. Hierbei kann die Randerhöhung bei einem in Draufsicht im Wesentlichen dreieckförmigen Handballen-Auflageelement entlang einer Innenkante bzw. Hinterkante, jedoch nicht entlang einer Vorderkante, die im Wesentlichen in Fahrtrichtung weist, verlaufen.

Eine weitere Verbesserung der Ergonomie kann dadurch erzielt werden, dass die Breite des Handballen-Auflageelements in montiertem Zustand in Längsrichtung bzw. in Fahrtrichtung zunimmt. Hierdurch erfolgt insbesondere eine gute Abstützung im Bereich des Daumengrundgelenks. Die Breite des Handballen-Auflageelements verbreitert sich in Längsrichtung vorzugsweise von ca. 5 mm auf ca. 15 mm. Die Breite des Handballen-Auflageelements ist an der breitesten Stelle somit vorzugsweise größer als 10 mm, insbesondere größer als 15 mm und besonders bevorzugt größer als 20 mm.

Des Weiteren ist es besonders bevorzugt, dass das Handballen-Auflageelement in Draufsicht, d. h. in einer Ansicht von oben in montiertem Zustand, eine im Wesentlichen dreieckige Form aufweist. Vorzugsweise sind die Kanten und Ecken dieser im Wesentlichen dreieckigen Form gerundet ausgebildet. Vorzugsweise weist das Handballen-Auflageelement somit eine in Fahrtrichtung weisende Vorderkante und eine im Wesentlichen entgegen der Fahrtrichtung bzw. in montiertem Zustand nach innen weisende Hinterkante auf. Bevorzugt ist es hierbei, dass die Vorderkante kürzer ist als die Hinterkante. Des Weiteren ist es bevorzugt, dass die Vorderkante des Handballen-Auflageelements zur Fahrtrichtung einen Winkel α von 30° bis 60° und besonders bevorzugt 40° bis 50° einschließt. Die Vorderkante ist hierbei ausgehend von einer Innenseite der Hood bzw. des Barends entgegen der Fahrtrichtung geneigt bzw. verläuft nach hinten. Vorzugsweise schließt die Hinterkante zur Fahrtrichtung einen Winkel β von 10° bis 20° ein. Die Hinterkante verläuft ausgehend von der Hood bzw. dem Barend nach vorne bzw. in Fahrtrichtung. Sofern die Vorderkante und/oder die Hinterkante gekrümmt, insbesondere konvex gekrümmt, ausgebildet sind, erfolgt das Bestimmen der Winkel mit Hilfe einer an einen auf die Länge der jeweiligen Kante bezogenen Mittelpunkt angelegten Tangente.

In weiterer bevorzugter Ausführungsform weist das Handballen-Auflageelement elastomeres Material auf bzw. ist aus elastomerem Material hergestellt. Aufgrund der Elastizität kann eine Federung bzw. Dämpfung realisiert werden. Dies erhöht wiederum den Greifkomfort.

Zusätzlich ist es möglich, das Handballen-Auflageelement zumindest teilweise mit einem Dämpfungselement zu bedecken bzw. mit einem Dämpfungselement teilweise oder vollständig zu ummanteln. Das Handballen-Auflageelement ist somit in bevorzugter Ausführungsform aus unterschiedlichen Materialien hergestellt, wobei ein innerer skelettartiger Kern aus härterem jedoch ebenfalls federelastischem Material hergestellt ist und dieser zusätzlich von einem weicheren dämpfenden beispielsweise polsterartigen Material umgeben ist.

Besonders bevorzugt ist es, dass das Befestigungselement mit einer Rennrad-Hood verbunden ist. Insbesondere ist das Befestigungselement einstückig mit der Rennrad-Hood ausgebildet. In besonders bevorzugter Ausführungsform betrifft die Erfindung somit eine Rennrad-Hood in Verbindung mit einem Handball-Auflageelement, wobei die Rennrad-Hood und das Handballen-Auflageelement insbesondere einstückig ausgebildet sind. In montiertem Zustand umgibt die Rennrad-Hood die Bremsgriffhalterung zumindest teilweise insbesondere vollständig. Selbstverständlich kann in die Bremsgriffhalterung ein Schaltelement integriert sein, wobei es sich insbesondere auch um ein elektronisches Schaltelement handeln kann.

In montiertem Zustand ist das Handballen-Auflageelement an einer Innenseite der Rennrad-Hood angeordnet. Die Oberseite des Handballen-Auflageelements liegt hierbei in montiertem Zustand etwas tiefer als die Oberseite der Rennrad-Hood. Insbesondere ist es hierdurch möglich, die gewohnte Greifposition an der Rennrad-Hood beizubehalten, wobei gleichzeitig ein Abstützen des Handballens mit Hilfe des erfindungsgemäßen Handballen-Auflageelements erfolgt.

Des Weiteren betrifft die Erfindung ein Fahrradgriffsystem mit zwei jeweils an einer Bremsgriffhalterung und/oder jeweils im Bereich eines Lenkerendes angeordneten Fahrradgriffelementen, wie vorstehend beschrieben. In bevorzugter Ausführungsform ist somit sowohl auf der linken als auch auf der rechten Seite eines Fahrradlenkers ein erfindungsgemäßes Fahrradgriffelement angeordnet. Hierdurch ist es auf einfache Weise möglich, je nach Ausgestaltung des Fahrradgriffelements, sowohl für die Linke als auch für die rechte Hand ein haptisches Feedback zu erzeugen, wenn beide Fahrradgriffelemente jeweils einen Aktuator aufweisen. Ferner kann in bevorzugter Ausführungsform jedes der beiden Fahrradgriffelemente eine elektrische Eingabeeinrichtung aufweisen, so dass unterschiedliche Signale erzeugt werden können. Dies kann beispielsweise durch Betätigen eines linken und/oder eines rechten Tasters erfolgen. Unterschiedliche Signale können beispielsweise auch durch einfaches und/oder mehrfaches Betätigen entsprechender Taster erzeugt werden.

Vorzugsweise sind die beiden Fahrradgriffelemente jeweils mit einer gemeinsamen außerhalb der Fahrradgriffelemente angeordneten Energiequelle und/oder Steuereinrichtung verbunden. Hierbei kann ein Mobiltelefon als Energiequelle und/oder Steuereinrichtung genutzt werden.

Nachfolgend wird die Erfindung anhand einer bevorzugten Ausführungsform unter Bezugnahme auf die anliegenden Zeichnungen näher erläutert.

Es zeigen:
- Fig. 1: eine schematische Draufsicht eines Rennradlenkers mit montiertem Brems-/Schaltgriff,
- Fig. 2: eine schematische perspektivische Draufsicht eines erfindungsgemäßen Fahrradgriffsystems mit zwei Fahrradgriffelementen,
- Fig. 3: eine schematische Vorderansicht eines Fahrradgriffelements in Richtung des Pfeils III in Figur 2,
- Fig. 4: eine schematische perspektivische Ansicht eines Brems-/Schaltgriffs, der an einen Rennradlenker montiert ist und eine Hood mit integriertem Auflageelement aufweist,
- Fig. 5: eine schematische Schnittansicht entlang der Linie V-V in Figur 4 und
- Fig. 6: eine schematisch vergrößerte Draufsicht der mit dem Rennrad-Bremsgriff verbundenen Hood.

Das erfindungsgemäße Fahrradgriffelement wird nachfolgend anhand der Figuren in Bezug auf eine bevorzugte Ausführungsform in Verbindung mit einer Rennrad-Hood beschrieben.

Ein Rennradlenker 10 ist mit einem Vorbau 12 verbunden oder einstückig mit diesem ausgebildet. Der Rennradlenker 10 weist ein quer verlaufendes Lenkerelement 14 auf, an das sich jeweils ein bogenförmiges im Wesentlichen einen Halbkreis ausbildendes Element 16 anschließt. Dieses endet in einem in montiertem Zustand im Wesentlichen horizontal verlaufenden rohrförmigen Lenkerende 18.

Mit dem gebogenen Element 16 ist eine Bremsgriffhalterung 20 verbunden. Diese ist im dargestellten Ausführungsbeispiel von einer Schutzhülle in Form einer Rennrad-Hood 22 umgeben. Mit der Bremsgriffhalterung, die selbstverständlich auch in eine Schaltung integriert sein kann, ist ein Bremshebel, der gegebenenfalls auch als Schalthebel fungiert, verbunden.

Die Rennrad-Hood 22 umgibt die Bremsgriffhalterung in üblicher Weise. Auf einer Innenseite 26 der Rennrad-Hood ist das erfindungsgemäße Fahrradgriffelement 28 angeordnet, das Handballen-Auflageelement 30 aufweist. Das Handballen-Auflageelement 30 ist in dem dargestellten montierten Zustand im Wesentlichen horizontal bzw. in Fahrtrichtung 40 leicht steigend angeordnet.

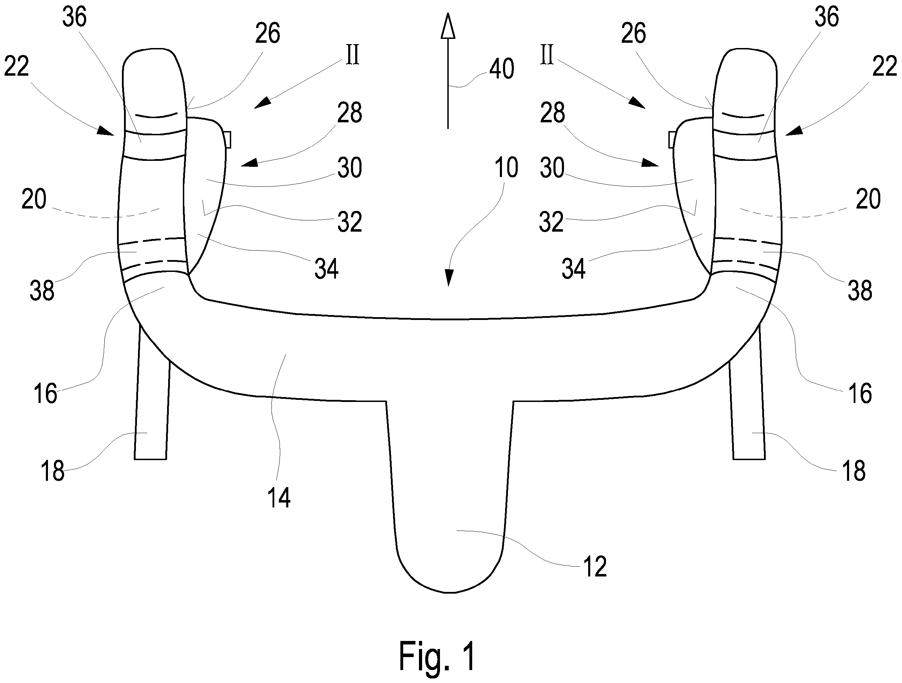

Im dargestellten Ausführungsbeispiel sind die beiden Fahrradgriffelement 28 über ein hakenförmiges Auflageelement 36, das auf der Hood aufliegt und eine Schelle 38, die im dargestellten Ausführungsbeispiel unter der Hood angeordnet ist, befestigt. Ebenso kann die Schelle 38 in Figur 1 unterhalb bzw. entgegen der Fahrrichtung unterhalb der Hood unmittelbar mit dem Lenker verbunden sein, wobei die Schelle 38 sodann beispielsweise von einem Griffband umwickelt ist.

Zur Verbesserung der Ergonomie ist eine sich im Wesentlichen in Längsrichtung des Handballen-Auflageelements 30 erstreckende Mulde 32 vorgesehen. In montiertem Zustand verlaufen die Längsrichtungen der beiden Mulden 32 leicht nach innen (Fig. 1). Zusätzlich weist das Handballen-Auflageelement an seiner Innenseite eine Randerhöhung 34 auf.

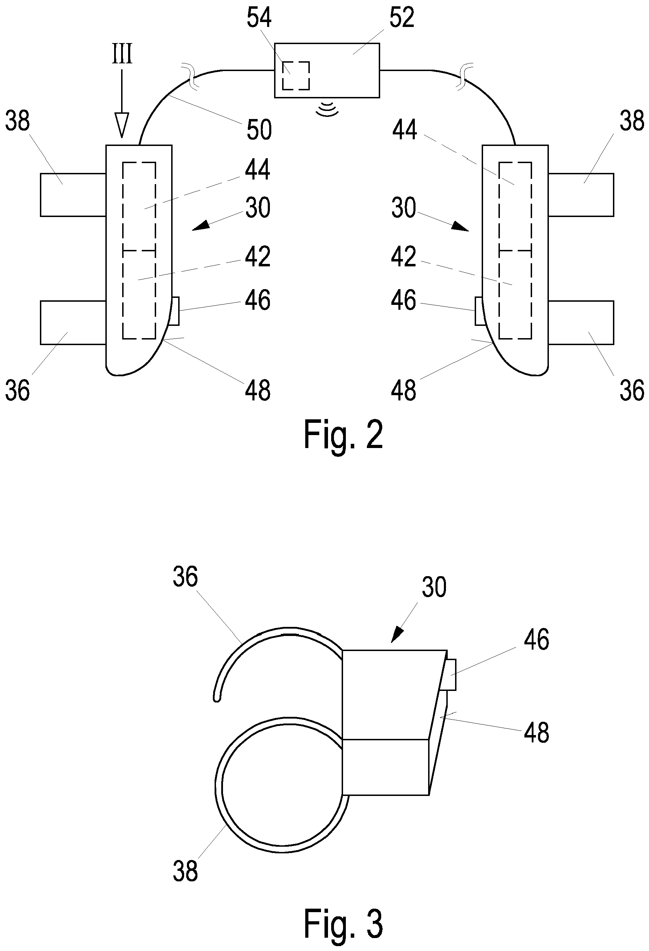

Die beiden in Figur 2 dargestellten Fahrradgriffelemente 30 sind symmetrisch zueinander ausgebildet und weisen dieselben Bauteile auf. Im dargestellten Ausführungsbeispiel sind innerhalb des Fahrradgriffelements 30 eine elektrische Eingabeeinrichtung 42 sowie ein Aktuator 44 angeordnet. Die elektrische Eingabeeinrichtung ist hierbei mit einem Schalter oder Taster 46 verbunden, der an einer Außenseite 48 des Fahrradgriffelements 30 vorgesehen ist.

Die elektrische Eingabeeinrichtung 42 sowie der Aktuator 44 sind über ein Kabel 50 mit einer Steuereinrichtung 52 verbunden, in die eine Energiequelle 54 integriert ist. Hierbei kann es sich bei der Steuereinrichtung 52 um eine gesonderte Steuereinrichtung handeln, die kabellos beispielsweise mit einem Mobiltelefon, einem Aktuator in einem Helm, und weiteren Steuer- und Messeinrichtungen am Fahrrad und dgl. verbunden sein kann.

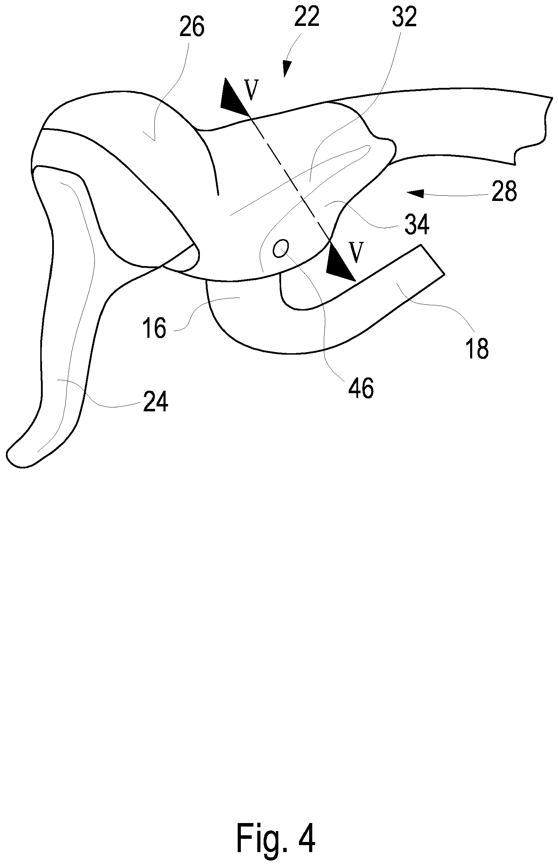

Bei einer alternativen Ausführungsform, wie sie in den Figuren 4 - 6 dargestellt ist, handelt es sich bei dem Befestigungselement um eine Hood eines Rennrad-Bremsgriffs mit vorzugsweise integriertem Auflageelement für den Handballen. In den Figuren 4 - 6 sind ähnliche und identische Bauteile mit denselben Bezugszeichen gekennzeichnet.

Mit dem gebogenen Element 16 ist eine Bremsgriffhalterung 20 (Fig. 4) verbunden. Diese ist im dargestellten Ausführungsbeispiel von einer Schutzhülle in Form einer Rennrad-Hood 22 umgeben. Mit der Bremsgriffhalterung, die selbstverständlich auch in eine Schaltung integriert sein kann, ist ein Bremshebel 24, der gegebenenfalls auch als Schalthebel fungiert, verbunden.

Die Rennrad-Hood 22 umgibt die Bremsgriffhalterung in üblicher Weise. Auf einer Innenseite 26 der Rennrad-Hood ist das Handballen-Auflageelement 28 angeordnet. Das Handballen-Auflageelement 28 ist in dem dargestellten montierten Zustand im Wesentlichen horizontal bzw. in Fahrtrichtung 40 leicht steigend angeordnet. Zur Verbesserung der Ergonomie ist eine sich im Wesentlichen in Längsrichtung des Handballen-Auflageelements 28 erstreckende Mulde 32 vorgesehen. In montiertem Zustand verlaufen die Fahrtrichtungen 40 der beiden Mulden 32 leicht nach innen.

Zusätzlich weist das Handballen-Auflageelement an seiner Innenseite eine Randerhöhung 34 auf.

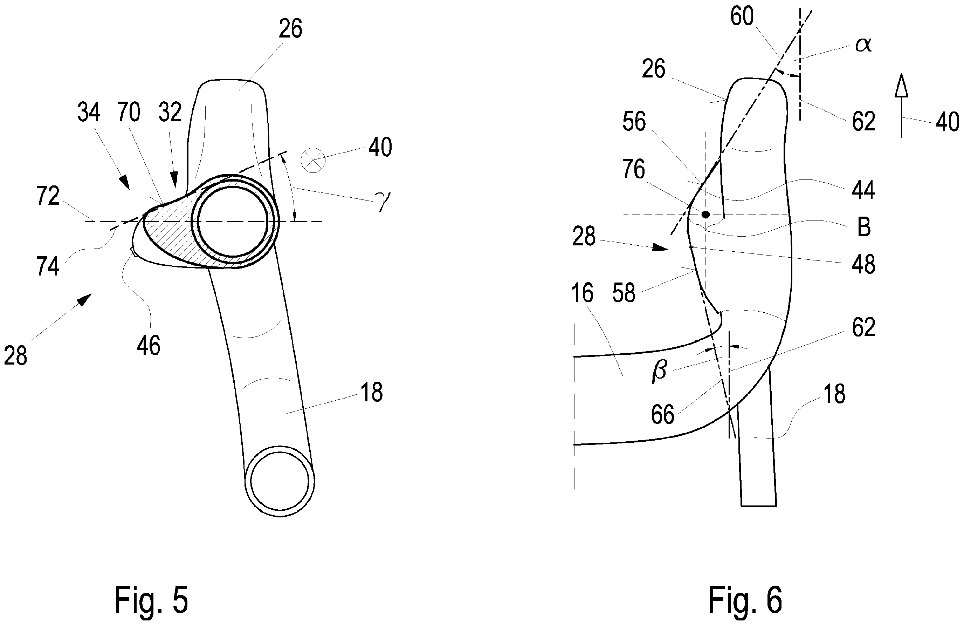

In der dargestellten besonders bevorzugten Ausführungsform des Handballen-Auflageelements 28 ist dieses in Draufsicht (Fig. 6) im Wesentlichen dreieckförmig ausgebildet und weist somit eine Vorderkante 56, die im Wesentlichen in Fahrtrichtung 40 weist, und eine Hinterkante 58, die in montiertem Zustand im Wesentlichen nach innen weist, auf. Die Vorderkante 56 verläuft ausgehend von der Innenseite 26 der Hood entgegen und die Hinterkante 58 in Fahrtrichtung 40. Die Kanten sind, wie aus Figur 6 ersichtlich, in Draufsicht leicht konvex ausgebildet, wobei insbesondere die Hinterkante 58 eine leicht konvexe Krümmung aufweist. Die Vorderkante 56 bzw. eine an die Vorderkante 56 angelegte Tangente 60 weist zu einer in Fahrtrichtung verlaufenden Linie 62 einen Winkel α auf. Dieser liegt vorzugsweise im Bereich von 30° bis 60°, insbesondere 40° bis 50°. Bei einer gekrümmten Vorderkante 56 wird die Tangente an einem mittleren Punkt 64, bezogen auf die Länge der Kante 56, angelegt.

Eine hintere Kante 58 bzw. eine Tangente 66 der hinteren Kante 58 weist zu einer in Fahrtrichtung 40 verlaufenden Linie 62 einen Winkel β auf. Dieser liegt vorzugsweise im Bereich von 10° bis 20°. Die Tangente 66 wird wieder an einen auf die Länge der hinteren Kante 58 bezogenen mittleren Punkt 68 angelegt.

Insbesondere aus der vorstehend beschriebenen Ausgestaltung des Handballe-Auflageelements 28 ergibt sich eine in Draufsicht (Fig. 6) im Wesentlichen dreieckförmige Ausgestaltung des Handballen-Auflageelements 28, wobei die Vorderkante 56 kürzer ist als die Hinterkante 58.

An einer breitesten Stelle weist in Draufsicht (Fig. 6) das Handballen-Auflageelement 28 eine Breite B auf, die vorzugsweise mindestens 10 mm und besonders bevorzugt mindestens 15 mm oder ggf. sogar mindestens 20 mm beträgt.

Des Weiteren ist es bevorzugt, dass eine Oberseite 70 (Fig. 5) gegenüber einer horizontalen Ebene 72 nach innen geneigt ist. Die Oberseite 70 bzw. eine an diese angelegte Tangente 74 weist hierbei vorzugsweise einen Winkel γ auf, der insbesondere im Bereich von 0° bis 20° und besonders bevorzugt im Bereich von 5° bis 10° liegt. Sofern die Oberseite 70 nicht eben ist, sondern insbesondere eine konkave Mulde 32 aufweist, wird die Tangente 74 an einen mittleren Punkt 76 (Fig. 6) angelegt. Der mittlere Punkt 76 entspricht im Wesentlichen dem Schwerpunkt des Handballen-Auflageelements 28 bzw. einem Mittelpunkt. Der Mittelpunkt ist definiert im Bereich der größten Breite B des Handballen-Auflageelements als Mitte bzw. halber Abstand dieser Breite, insbesondere zur Innenseite 26 der Hood.

Zusätzlich ist es möglich, dass die Oberseite 70 in Fahrtrichtung 40 leicht steigend ausgebildet ist.

Die Randerhöhung 34 verläuft in bevorzugter Ausführungsform nur im Bereich der Hinterkante 58 und nicht im Bereich der Vorderkante 56.

Entsprechend der in den Figuren 1 - 3 dargestellten Ausführungsform weist auch die in den Figuren 4 - 6 dargestellte Ausführungsform eine Eingabeeinrichtung 42, 46 auf. Des Weiteren ist innerhalb des Auflageelements ein in den Figuren 4 - 6 nicht dargestellter elektrischer Aktuator 44 entsprechend der Ausführungsform in Figuren 1 - 3 vorgesehen. Diese Bauteile sind, wie insbesondere aus Figur 2 ersichtlich, und anhand dieser Figur beschrieben, vorzugsweise auch in der in den Figuren 4 - 6 dargestellten Ausführungsform vorgesehen und über Steuerelemente angesteuert bzw. mit einer Batterie verbunden.

## Patentansprüche

1. Fahrradgriffelement mit
einem Befestigungselement (22) zur Befestigung an einer Rennrad-Bremsgriffhalterung (20) oder einem Lenker,
einem mit dem Befestigungselement (22) verbundenen Auflageelement (28) zur Abstützung eines Handballens in montiertem Zustand,
einer mit dem Auflageelement (28) verbundenen elektrischen Eingabeeinrichtung (42, 46) und
einem in dem Auflageelement (28) angeordneten elektrischen Aktuator (44) zur Erzeugung eines haptischen Signals.

2. Fahrradgriffelement nach Anspruch 1, **dadurch gekennzeichnet, dass** die Eingabeeinrichtung (42, 46) ein Signalerzeugungselement (42) aufweist, das vorzugsweise innerhalb des Auflageelements (30) angeordnet ist.

3. Fahrradgriffelement nach Anspruch 2, **dadurch gekennzeichnet, dass** die Eingabeeinrichtung (42, 46) ein Schaltelement (46) aufweist, das mit dem Signalerzeugungselement (42) verbunden ist.

4. Fahrradgriffelement nach Anspruch 3, **dadurch gekennzeichnet, dass** die Eingabeeinrichtung (42, 46) an einer Außenseite des Auflageelements (30) angeordnet ist.

5. Fahrradgriffelement nach einem der Ansprüche 1 bis 4, **dadurch gekennzeichnet, dass** der elektrische Aktuator (44) ein Vibrationselement aufweist.

6. Fahrradgriffelement nach einem der Ansprüche 1 bis 5, **dadurch gekennzeichnet, dass** die Eingabeeinrichtung (42, 46) und/oder der Aktuator (44) mit einer Energiequelle (54) verbunden sind.

7. Fahrradgriffelement nach Anspruch 6, **dadurch gekennzeichnet, dass** die Energiequelle (54) innerhalb oder außerhalb des Auflageelements (30) angeordnet ist.

8. Fahrradgriffelement nach einem der Ansprüche 1 bis 7, **dadurch gekennzeichnet, dass** die Eingabeeinrichtung (42, 46) und/oder der Aktuator (44) mit einer Steuereinrichtung (52) verbunden ist.

9. Fahrradgriffelement nach einem der Ansprüche 1 bis 8, **dadurch gekennzeichnet, dass** eine Oberseite des Handballen-Auflageelements (28) in montiertem Zustand im Wesentlichen Horizontal oder in Fahrtrichtung (40) leicht steigend ausgebildet ist.

10. Fahrradgriffelement nach einem der Ansprüche 1 bis 9, **dadurch gekennzeichnet, dass** an der Oberseite des Handballen-Auflageelements (28) eine im Wesentlichen in Längsrichtung (40) verlaufende Mulde (32) aufweist.

11. Fahrradgriffelement nach einem der Ansprüche 1 bis 10, **dadurch gekennzeichnet, dass** das Handballen-Auflageelement (28) eine dem Befestigungselement (22) gegenüberliegende Randerhöhung (34) aufweist.

12. Fahrradgriffelement nach einem der Ansprüche 1 bis 11, **dadurch gekennzeichnet, dass** eine Breite des Handballen-Auflageelements in Längs- bzw. Fahrtrichtung (40) zunimmt.

13. Fahrradgriffelement nach einem der Ansprüche 1 bis 12, **dadurch gekennzeichnet, dass** das Befestigungselement (22) mit einer Rennrad-Hood verbunden, insbesondere einstückig ausgebildet ist, wobei die Rennrad-Hood (22) in montiertem Zustand vorzugsweise eine Bremsgriff-Halterung (20) zumindest teilweise umgibt.

14. Fahrradgriffsystem mit zwei jeweils an einer Bremsgriffhalterung und/oder jeweils im Bereich eines Lenkerendes angeordneten Fahrradgriffelementen nach einem der Ansprüche 1 bis 13.

15. Fahrradgriffsystem nach Anspruch 14, **dadurch gekennzeichnet, dass** die beiden Fahrradgriffelemente mit einer gemeinsamen, insbesondere außerhalb der Auflageelemente (30) angeordneten Energiequelle (54) und/oder Steuereinrichtung (42) verbunden sind.
